# EUROPÄISCHE PATENTSCHRIFT

(11) **EP 0 609 178 B1**
(45) Veröffentlichungstag und Bekanntmachung des Hinweises auf die Patenterteilung: **22.05.1996**
(21) Anmeldenummer: 94810033.4
(22) Anmeldetag: 19.01.1994
(51) Int. Cl.: H04L 12/28, H04L 12/40

(54) **Verfahren und Einrichtung zur bidirektionalen Informationsübertragung (Protokoll)**
Method and apparatus for bidirectional transmission of information (protocol)
Procédé et dispositif de transmission d'information bidirectionelle (protocole)

(30) Priorität: 26.01.1993 CH 221/93
(43) Veröffentlichungstag der Anmeldung: 03.08.1994
(73) Patentinhaber: ROYALE CONSULTANTS Ltd., Dublin 2 (IE)
(72) Erfinder: Gut, Max B., Dipl.-Ing. ETH, CH-6353 Weggis (CH)
(74) Vertreter: OK pat AG

(56) Entgegenhaltungen:
- EP-A- 0 452 124
- EP-A- 0 520 877
- DE-A- 3 223 831
- GB-A- 2 252 222
- IEEE TRANSACTIONS ON CONSUMER ELECTRONICS Bd. 37, Nr. 2 , Mai 1991 , NEW YORK US Seiten 122 - 128 J. HOFMANN 'THE CONSUMER ELECTRONIC BUS INFRARED SYSTEM'

## Beschreibung

Die Erfindung betrifft ein Verfahren und eine Einrichtung zur bidirektionalen Informationsübertragung, wobei die Uebertragung unter Anwendung eines Protokolls zwischen Kommunikationspartnern durchgeführt wird, die je Sender und Empfänger aufweisen, und wobei die Informationen bitseriell übertragen werden und die Richtung der Informationsflüsse umschaltbar ist.

Mittels solcher Verfahren kann zwischen Kommunikationspartnern - wie beispielsweise Computern und Druckern - oder anderen intelligenten elektronischen Systemen, die nicht über Kabel miteinander verbunden sind, eine Informationsübertragung durchgeführt werden, wobei Infrarotlicht oder Funk als Uebertragungsmedium angewendet werden kann. Derartige Verfahren können auch im Zusammenhang mit Kommunikationsnetzwerken eingesetzt werden, wobei zwischen Kommunikationspartnern, die über Leiter im Netzwerk verbunden sind und solchen, die nicht über Leiter am Netzwerk angeschlossen sind, Informationen ausgetauscht werden können.

Bei der Kommunikation in Netzwerken mit mehreren Teilnehmern muss sich das Netzwerk selbst automatisch verwalten, d.h. es muss festgelegt werden, welche Teilnehmer zu welchen Zeitpunkten aufgrund von welchen Kriterien miteinander kommunizieren können. Die Gesamtheit der Regeln und Vereinbarungen für die Verwaltung eines Netzwerkes und die automatische Durchführung eines geordneten Informationsaustausches zwischen den Kommunikationspartnern ist das Protokoll. Bei komplexeren Netzwerkverwaltungen basiert das Protokoll auf einer dezentralen Verwaltung, bei der jeder Teilnehmer "Master" sein kann und einen Teil der Verwaltungsaufgabe übernimmt. Anhand des Protokolls wird festgelegt, wie ein Teilnehmer das Netzwerk zu benutzen und wieder freizugeben hat.

Bekannte Protokolle für solche Netzwerke sind das CSMA/CD-Protokoll ("carrier sense, multiple access/collision detection", z.B. Ethernet) und das CSMA/CA-Protokoll ("carrier sense, multiple access/collision avoidance"), wobei der Unterschied im wesentlichen darin liegt, dass beim CSMA/CD-Protokoll im Konfliktfall jeder Kommunikationspartner seine Sendung einstellt und erst nach einer gewissen Wartezeit mit einem neuen Zugriffsversuch auf das Netzwerk (Bus) beginnt. Dadurch entsteht eine Periode des Wartens, während welcher kein Informationsaustausch stattfindet. Beim CSMA/CA-Protokoll ergibt sich dagegen eine solche Wartezeit nicht. Die Auslastung des Netzwerkes ist daher beim CSMA/CD-Protokoll gegenüber dem CSMA/CA-Protokoll weniger effizient.

Damit ein CSMA-Protokoll verwirklicht werden kann, müssen zumindest folgende Voraussetzungen erfüllt sein:
- Masterfähigkeit: Jeder Teilnehmer muss fähig sein, eigenständig aufgrund seines Uebermittlungsbedarfes das Uebertragungsmedium zu aquirieren.
- Mithörmöglichkeit: Jeder Teilnehmer muss fähig sein, den Verkehr auf dem Netzwerk zu beobachten und als Kriterium für die Aquisition des Netzwerkes zu verwenden. Charakteristisch bei einem Netzwerk mit elektrischen Leitern mit Busstruktur ist die Tatsache, dass alle Busteilnehmer quasi gleichzeitig jede auf dem Bus übertragene Information mithören können (z.B. durch "wired or"-Verknüpfung der Ausgangsstufen).
- Unterbrechbarkeit: Jeder Teilnehmer muss feststellen können, ob während der Benützung des Netzwerkes ein anderer Teilnehmer das Netzwerk ebenfalls benützt, um in einem solchen Falle seine Uebertragung sofort stoppen zu können.
- Bidirektionalität: Das Uebertragungsmedium muss fähig sein, Informationen bidirektional zu übermitteln.
- Gleichzeitigkeit: Uebertragungsmedium und Kommunikationspartner müssen derart ausgestaltet sein, dass die gleichzeitige Benützung des Uebertragungskanals durch mehrere Kommunikationspartner möglich ist. Dies bedeutet u.a., dass bei einem Netzwerk mit elektrischen Leitern mit Busstruktur die Verwendung von Push-Pull-Ausgangsstufen nicht möglich wäre.

Die genannten Voraussetzungen implizieren zunächst, dass der Teilnehmer während dem Senden empfangsfähig bleiben muss. Aus diesem Grunde wurden CSMA/CA-Protokolle bisher nur in der Basisband-Uebertragungstechnik verwendet.

Die Anwendung von CSMA-Protokollen ist also nicht möglich, wenn wegen des Uebertragungsmediums oder des Uebertragungsverfahrens ein Kommunikationspartner während des Sendens einer Information nicht gleichzeitig hören kann, was andere Kommunikationspartner senden. Ein Beispiel dafür sind Funkkanäle, bei welchen wegen extrem unterschiedlichen Feldstärken während des Sendens die Gegenstation(en) nicht mehr gehört werden kann (können). Ein anderes Beispiel sind auf Lichtwellenleitern basierende Uebertragungssysteme, bei welchen aufgrund des verwendeten Raum-Multiplexverfahrens die Information jeweils nur unidirektional übertragen wird.

Gemäss dem erfindungsgemässen Verfahren kennzeichnet sich ein Kommunikationspartner, der Uebermittlungsbedarf hat und noch kein Bit empfangen hat, als initiierender Kommunikationspartner, und einer, der keinen Uebermittlungsbedarf hat, jedoch ein Bit empfangen hat, kennzeichnet sich als empfangender Kommunikationspartner. Zu Beginn der Informationsübertragung sendet der initiierende Kommunikationspartner ein seine Kennzeichnung ausdrückendes Startbit doppelter Länge und wartet dann eine bestimmte Zeit, während welcher der empfangende Kommunikationspartner ein Echo in Form eines Startbits einfacher Länge zurücksendet. Der initiierende Kommunikationspartner wartet nach jedem gesendeten Bit auf ein Echo und vergleicht dieses bei Eintreffen mit dem gesendeten Bit, wobei er bei Ungleichheit seine Sendung abbricht. Nach Ende der Informationsübertragung und keinem weiteren Uebermittlungsbedarf wird die Kennzeichnung des initiierenden und des empfangenden Kommunikationspartners wieder aufgehoben.

Bei einem anderen bekannten Verfahren, bei dem die Informationen mittels Infrarotlicht übertragen werden, wird ein Half-Duplex-Betrieb angewendet, wobei die Informationen in Form von Datenpaketen gesendet werden. Auch hierbei kann ein CSMA-Protokoll nicht angewendet werden, da die vorstehend erwähnte Voraussetzung des gleichzeitigen Hörens während des Sendens nicht erfüllt ist. Mit dem Verzicht auf Anwendung eines solchen Protokolls verschlechtert sich aber die Effizienz der Informationsübertragung bzw. das zeitliche Verhalten, indem z.B. lange Wartezeiten zwischen dem Aufkommen des Uebermittlungsbedarfes und dem Beginn der eigentlichen Informationsübermittlung entstehen.

Ein weiteres bekanntes Verfahren ist beispielsweise in der **EP-A-0 520 877** beschrieben. Dieses Verfahren verwendet für die Datenübertragung auf Stromnetzen ein Stromträgerverfahren in Kombination mit FSK (frequency shift keying) oder ASK (amplitude shift keying) und ermöglicht durch die unmittelbare bitweise Überwachung der selbst ausgesandten Information eine sofortige Erkennung von Störungen und Kollisionen auf dem Übertragungsmedium.
Bei diesem Verfahren wird zudem ein 'positives' Echo von der Leitung empfangen und mit dem ausgesandten Bit verglichen, was bei Ungleichheit als Kollision mit einer zweiten Station interpretiert wird und damit das Weitersenden entsprechend den (collision detection) Regeln stoppt.
Da die sendende Station aufgrund der empfangenen Information meistens nicht erkennt als was (0 oder 1) eine dritte, empfangende Station tatsächlich diese Übertragung interpretiert hat, kann ein CA-Mechanismus nicht implementiert werden.

Der Erfindung liegt deshalb die Aufgabe zugrunde, ein Verfahren und eine Einrichtung zur Durchführung des Verfahrens der eingangs genannten Art vorzuschlagen, bei welchen ein CSMA/CA-Protokoll für die Informationsübertragung angewendet werden kann.

Diese Aufgabe wird durch die in den unabhängigen Patentansprüchen 1 und 11 gekennzeichnete Erfindung gelöst.

Die erfindungsgemässe Uebertragungseinrichtung zur Durchführung des Verfahrens ist durch die kennzeichnenden Merkmale des Patentanspruches 11 charakterisiert. In den abhängigen Ansprüchen 2 bis 10 bzw. 12 und 13 sind zweckmässige weitere Ausgestaltungen des Verfahrens bzw. der Einrichtung angegeben.

Die mit der Erfindung erzielten Vorteile sind darin zu sehen, dass CSMA-Protokolle bei Uebertragungsmedien angewendet werden können, bei welchen während dem Aussenden nicht gleichzeitig gehört werden kann. Somit können in bereits bestehenden, drahtgebundenen Netzwerken, die nach CSMA-Protokollen arbeiten, Netzwerkerweiterungen über andere, insbesondere drahtlose Uebertragungsmedien vorgenommen und dabei ein ähnliches Uebertragunsverhalten erreicht werden wie auf dem drahtgebundenen Netzwerk. Im weiteren wird die Wartezeit bei Uebermittlungsbeginn extrem vermindert, was sich insbesondere bei Uebertragungssystemen, bei denen Echtzeitverhalten verlangt wird, positiv auswirkt. Dank Erweiterung des Signalalphabets kann der sendende Kommunikationspartner mittels des Startbits doppelter Länge auf einfache Weise charakterisiert werden. Ausserdem ergeben sich dadurch folgende weitere, vorteilhafte Möglichkeiten:
- Erhöhung der tatsächlichen Baudrate durch Uebermittlung von zwei Bits im ursprünglichen Signalelement
- Erhöhung der Redundanz der Informationsübermittlung durch doppelte Bitdarstellung.
- Einführung eines direkten Servicekanals, z.B. zur Uebermittlung der Control-Signale "Clear to send" (CTS) und "Request to send" (RTS) bei RS 232-Schnittstellten und Modem-Applikationen.
- Reduktion des Energiebedarfs durch Verzicht auf die Uebermittlung des Wertes logisch "0".

Im folgenden wird die Erfindung anhand eines Ausführungsbeispiels im Zusammenhang mit der Zeichnung näher erläutert. Es zeigen:
- Fig. 1: die Prizipdarstellung einer erfindungsgemässen Einrichtung mit zwei Kommunikationspartnern,
- Fig. 2: die Blockschaltbilder der Kommunikationspartner bei der Einrichtung gemäss Fig. 1,
- Fig. 3: ein Schaltschema eines Infrarot-Senders der Einrichtung,
- Fig. 4: ein Blockschaltbild einer Steuereinheit der Einrichtung,
- Fig. 5: ein Diagramm eines Zugriffes mehrerer Kommunikationspartner auf einen Bus eines Kommunikationsnetzwerkes gemäss einem CSMA/CA-Protokoll,
- Fig. 6: Diagramme, die die zeitliche Verteilung von Bits und "unbenutzten" Zeitabschnitten eines zu übertragenden Informationsflusses zeigen,
- Fig. 7: ein Impulsdiagramm der zu übertragenden Bits eines Informationsflusses, welches der Darstellung eines erweiterten Signalalphabets dient,
- Fig. 8: ein Diagramm eines Informationsflusses und eines Echos dieses Informationsflusses,
- Fig. 9: eine Darstellung der Sende- und Empfangsverhältnisse mehrerer in einem Raum befindlicher Kommunikationspartner,
- Fig. 10: die graphische Darstellung einer Definition eines zu übertragenden Charakters,
- Fig. 11: ein Kommunikationsnetzwerk mit mehreren festverdrahteten sowie nicht drahtgebundenen, mobilen Kommunikationspartnern,
- Fig. 12: ein Zustandsdiagramm des Schaltwerkes für einen Modulator der Steuereinheit, und
- Fig. 13: ein Zustandsdiagramm des Schaltwerkes für einen Empfangsteil der Steuereinheit.

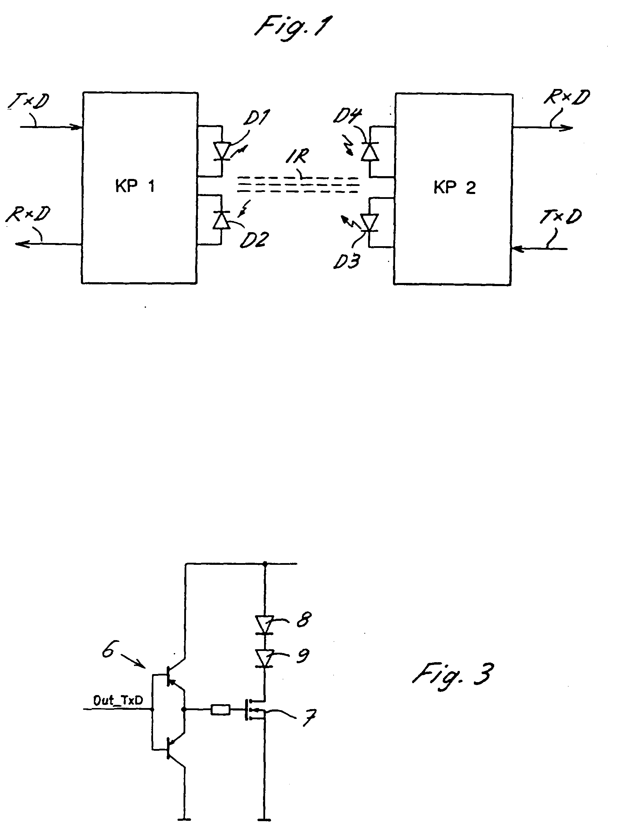

In der Fig. 1 sind mit KP1 und KP2 Kommunikationspartner, wie beispielsweise Computer oder andere intelligente elektronische Systeme, bezeichnet. Die Kommunikationspartner KP1, KP2 sind mit je einem Sender 2 und einem Empfänger 3 (Fig. 2) ausgestattet. Zum Zwecke der Informationsübertragung mittels Infrarotlicht IR weisen die Sender Leuchtdioden D1, D3 und die Empfänger Photodioden D2, D4 auf. Ueber Leitungen TxD werden zu sendende Informationen zugeführt und über Leitung RxD empfangene Informationen weitergeleitet.

Gemäss Fig. 2 weist jeder Kommunikationspartner KP1, KP2 eine Steuereinheit 1 auf, die über eine Leitung Out_TxD mit dem Sender 2 und über eine Leitung In_RxD mit dem Empfänger 3 verbunden ist. An der Steuereinheit 1 ist ein Oszillator 4 angeschlossen, der ein Taktsignal mit einer Frequenz von beispielsweise 5,0688 MHz erzeugt. Ueber Leitungen Input_TxD und Output RxD steht die Steuereinheit 1 mit einem Spannungspegelwandler 5 in Verbindung, dem über die Leitung TxD die zu sendenden Informationen zugeführt werden und der über die Leitung RxD die empfangenen Informationen abgibt. Mit gestrichelten Pfeilen IR_Tx, IR_Rx sind die mittels Infrarotlicht zu übertragenden, gesendeten bzw. empfangenen Informationen symbolisiert. Ueber eine weitere Leitung Rx_Control ist der Empfänger 3 mit der Steuereinheit 1 verbunden. Mit Flow_bridge, Test und Loop_back sind drei Eingänge der Steuereinheit 1 bezeichnet, über welche die entsprechenden, weiter unten näher beschriebenen Betriebsarten aktiviert werden können.

Der Sender 2 enthält gemäss Fig. 3 eine Treiberstufe 6, einen der Treiberstufe 6 nachgeschalteten Leistungs-FET 7 sowie zwei im Ausgangskreis angeordnete Leuchtdioden 8, 9. Ueber die mit dem Eingang verbundene Leitung Out_TxD werden dem Sender 2 von der Steuereinheit 1 binäre Signale zugeführt, wobei von den Leuchtdioden 8, 9 Schwingunspakete (Bursts) mit einer Frequenz von beispielsweise 460,8 kHz ausgesendet werden und die Schwingunspakete rechteckförmige, modulierte Wellenzüge bilden (Umhüllende, Fig. 7).

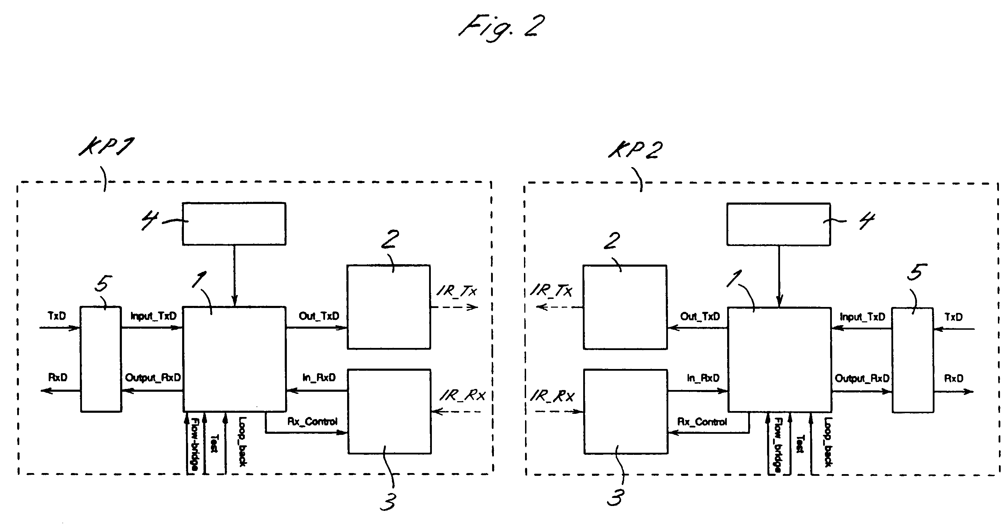

Gemäss Fig. 4 enthält die Steuereinheit 1 einen Sendeteil 10, einen Empfangsteil 11 und ein Schaltwerk 12 (state machine). Die Teile 10, 11 sind mit dem Schaltwerk 12 über Leitungen BS, S_Bit bzw. BR, R_Bit verbunden, wobei Sendeteil 10 und Empfangsteil 11 sendebezogene bzw. empfangsbezogene Aufgaben erfüllen und das Schaltwerk 12 die Funktion beider Teile 10, 11 koordiniert sowie Signale (Rx_Control) erzeugt, die für die Steuerung des Empfängers 3 notwendig sind. Der Sendeteil 10 weist einen Modulator 10.2 und einen Multiplexer 10.3 auf, die weiter unten anhand der Funktionsbeschreibung näher erläutert werden.

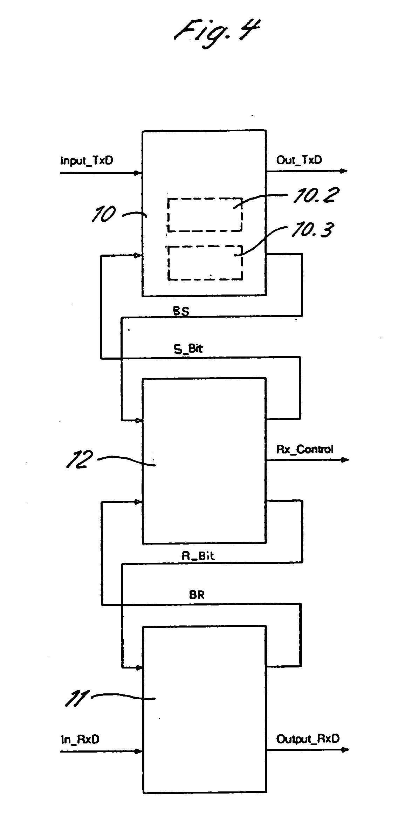

Gemäss dem Zeitdiagramm Fig. 5 sind mit TA, TB, TC und TD Daten-Telegramme bezeichnet, die von Kommunikationspartnern KPA, KPB, KPC und KPD ausgesendet werden, welche über einen Bus (BU in Fig. 11) eines drahtgebundenen Netzwerkes miteinander verbunden sind. Pfeile P1 symbolisieren Zugriffsabsichten, während Pfeile P2 mögliche Kollisionen symbolisieren und Ziffern 1 bis 7 mögliche Zugriffs- bzw. Kollisionszeitpunkte darstellen. Anhand der der Fig. 5 wird im folgenden die Wirkungsweise eines CSMA/CA-Protokolls beschrieben:

Beabsichtigt KPA Daten zu übermitteln, so hört er vorerst auf dem Bus mit und stellt fest, ob dieser durch eine andere Kommunikation bereits belegt ist (Zeitpunkt 1). Stellt er fest, dass der Bus frei ist, sendet er sein Telegramm TA. Beabsichtigt in dieser Zeit ein anderer Kommunikationspartner (KPC) ebenfalls ein Telegramm TC zu übermitteln, so stellt er jetzt fest, dass der Bus belegt ist (Zeitpunkt 2). Er wartet daher mit der Uebermittlung, bis am Ende des Telegramms TA der Bus wieder frei ist (Zeitpunkt 3).

Beabsichtigen nun mehrere Kommunikationspartner (KPD, KPB) während der Uebermittlung eines Telegrammes (TC) durch einen anderen Kommunikationspartner (KPC) selbst ein Telegramm zu übermitteln (Zeitpunkte 4, 5), so wird ihr (zunächst verhinderter), späterer Zugriffsversuch durch die Freigabe des Busses (Zeitpunkt 6) quasi synchronisiert: Beide Kommunikationspartner hören auf dem Kanal nichts mehr und beginnen somit gleichzeitig mit dem Senden ihres Telegrammes TB, TD (Zeitpunkt 6). Während dem Aussenden ihrer Telegramme TB, TD hören aber beide Kommunikationspartner mit und prüfen, ob die Information, die sie ausgesendet haben, mit der Information, die sie hören, übereinstimmt. Sobald das Gehörte nicht mehr mit dem Gesendeten übereinstimmt, beenden sie unmittelbar die Sendung und versuchen einen neuen Zugriff erst, wenn sie festgestellt haben, dass der Bus wieder frei ist (Zeitpunkt 7, KPB). Wird durch das Netzwerk sichergestellt, dass gleichzeitig mehrere Kommunikationspartner störungsfrei senden können (z.B: "wired or"-Verknüpfung auf dem elektrischen Leiter), so wird der eine Kommunikationspartner (KPD, Zeitpunkt 7) nicht feststellen können, dass weitere Kommunikationspartner (KPB, Zeitdauer 6-7) gleichzeitig, aber das Gleiche gesendet haben. Er wird mit der Telegrammübermittlung daher ungehindert weiterfahren. Damit hatte faktisch KPD gegenüber KPB die höhere Priorität. Wird die senderseitige Adresse als erstes innerhalb eines Telegrammes ausgesendet, kann aufgrund der Busteilnehmeradresse die Priorität verteilt und bestimmt werden.

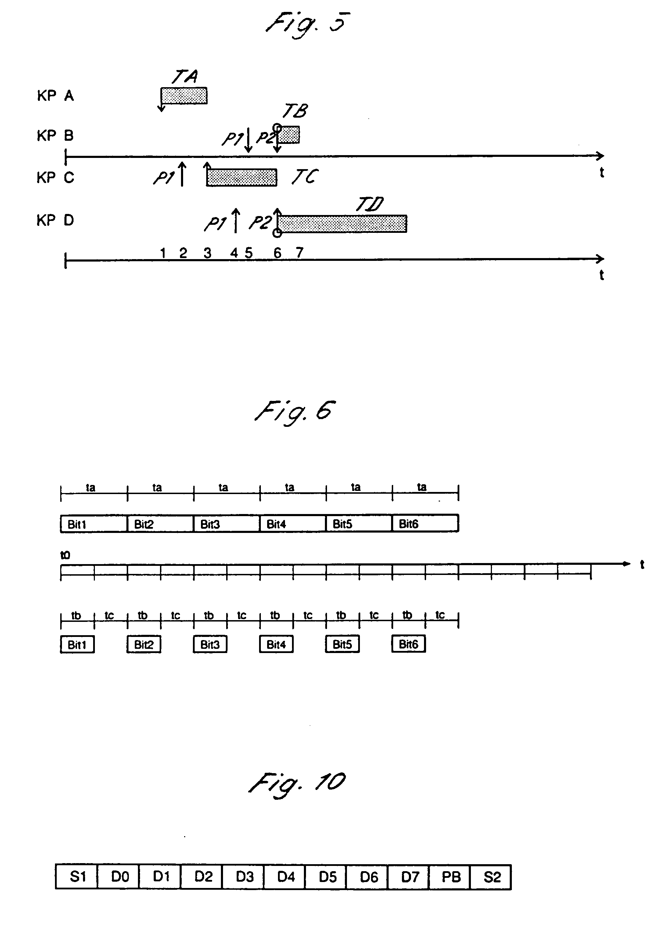

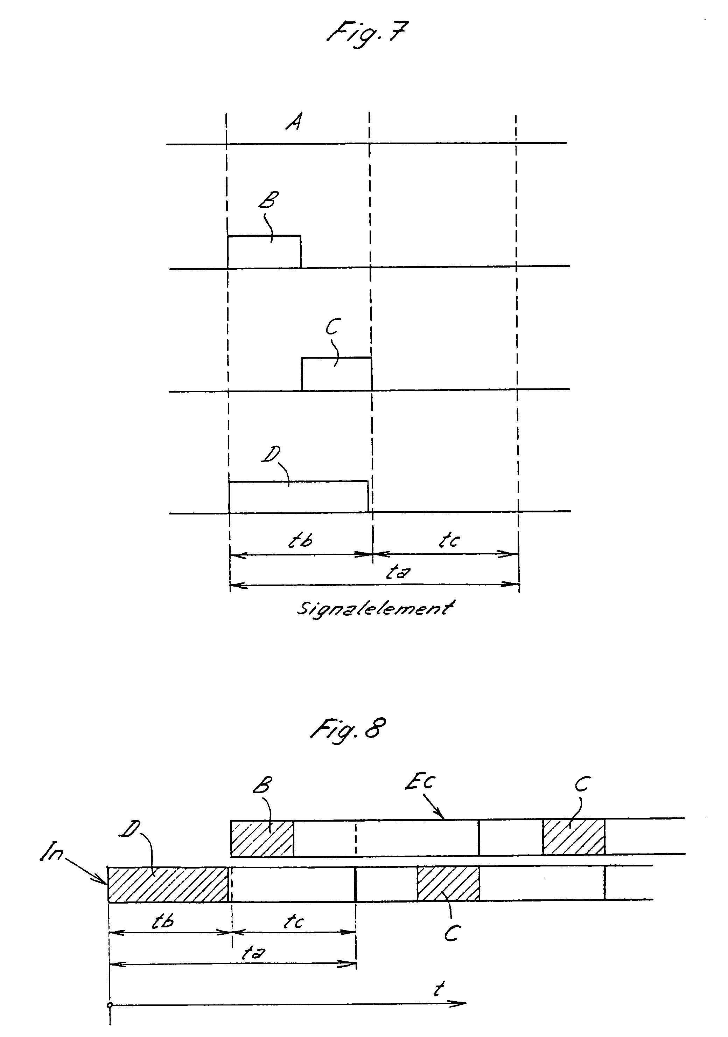

Das Zeitdiagramm nach Fig. 6 veranschaulicht die beim vorliegenden bit-seriellen Verfahren angewendete zeitliche Bit-Verteilung. Gemäss Fig. 6 ist der zeitliche Abstand ta zwischen den Anfängen der aufeinanderfolgenden Bits eines Informationsflusses in zwei zeitlich gleiche Hälften tb, tc geteilt. Die Bits werden nur während der ersten Hälfte tb übertragen, wobei die zweiten Hälften tc für den betreffenden Informationsfluss unbenutzte Zeiträume darstellen. Dadurch wird es möglich, dass ein initiierender Kommunikationspartner annähernd gleichzeitig mit der Aussendung eines Bits, d.h. noch innerhalb des gleichen Zeitraumes ta, dessen Echo hören kann, welches ein empfangender Kommunikationspartner jeweils in den zweiten Hälften tc zurücksendet (siehe auch Fig. 8).
Dieses Echo ist damit ein aktives; d.h. ein von einem initiierenden Kommunikationspartner (IKP) ausgesandtes Bit wurde von einem empfangenden Kommunikationspartner (EKP) empfangen, interpretiert und das Ergebnis der Interpretation als Bestätigung (Echo) zurückgesandt.
Wird im weiteren daher eine Modulations- und Kodierungsmethode verwandt, bei welcher empfangsseitig der Empfang einer 0, einer 1 und einer 1 unterscheidbar ist und wird mithilfe der Interpretationsregel bei gleichzeitigem Empfang einer 0 und einer 1 eine Zahl bevorzugt und als Echo derart wieder zurückgesandt, so kann nach dem CSMA/CA-Verfahren eine Arbitration (Schiedsrichterentscheid) durchgeführt werden. Im Vergleich zu dem im Rahmen des Standes der Technik diskutierten **EP-A- 0 520 877** wird also beim erfindungsgemässen Verfahren durch die Interpretation der empfangenden Daten beim EKP implizit eine Arbitration durchgeführt und das Ergebnis der Arbritration als Echo wieder zurückgesandt. Die Detektion der Kollision geschieht dann anhand dieses Echos und des selbst ausgesandten Bits beim IKP und veranlasst diesen sich nach den Regeln der (Collision avoidence) Kollisionsvermeidungs-Methode zu verhalten.

In der nachfolgenden Beschreibung wird für den zeitlichen Abstand ta auch die Bezeichnung "Signalelement" verwendet.

Dem in Fig. 7 dargestellten Impulsdiagramm liegt eine Kombination aus Pulsburst-Positionsmodulation (PBPM) und Pulsburst-Breitenmodulation (PBBM) zugrunde. Mit dieser Kombination wird eine Erweiterung des Signalalphabets insofern erzielt, als die einzelnen Bits vier verschiedene Bedeutungen vermitteln können. Die Bits werden in Form von Impulsen übertragen, die aus den Umhüllenden von Schwingungspaketen (Bursts) gebildet sind, wobei die Aussendung der Schwingungspakete vom Modulator 10.2 des Sendeteiles 10 (Fig. 4) gesteuert wird. Im einzelnen bedeuten gemäss Fig. 7:
A kein Impuls während der Dauer eines halben Signalelementes, wobei "kein Impuls" als doppelt logisch "O" gewertet wird.
B ein Impuls von halber Dauer des halben Signalelementes mit Beginn an dessen Anfang; dies wird für die Kennzeichnung von logisch "1" verwendet.
C ein Impuls von halber Dauer des halben Signalelementes mit Beginn in dessen Mitte; dies wird für die Kennzeichnung von logisch "O" verwendet.
D ein Impuls von annähernd der Dauer des halben Signalelementes; dies wird als doppelt logisch "1" gewertet und dient bei der Uebermittlung von Informationen der Kennzeichnung eines initiierenden Kommunikationspartners IKP. Ein solcher Impuls wird in der nachfolgenden Beschreibung auch als "Startbit doppelter Länge" bezeichnet. Die steigende Flanke dieses Startbits wird zur Synchronisation der Empfänger-Zeitbasis verwendet. Bei Erscheinen des Startbits beim empfangenden Kommunikationspartner EKP wartet dieser mit der Aussendung des Echos, bis der Anfang der zweiten zeitlichen Hälfte tc erreicht ist.

In der Fig. 8 ist mit "In" ein von einem initiierenden Kommunikationspartner gesendeter Informationsfluss und mit "Ec" ein von einem empfangenden Kommunikationspartner als Echo in entgegengesetzter Richtung zurückgesendeter Informationsfluss bezeichnet. Ein Startbit D doppelter Länge des Informationsflusses In wird mit einem Echo in Form eines Startbits B einfacher Länge beantwortet, wohingegen ein Datenbit C (z.B. logisch "O") als Echo-Datenbit C zurückgesendet wird.

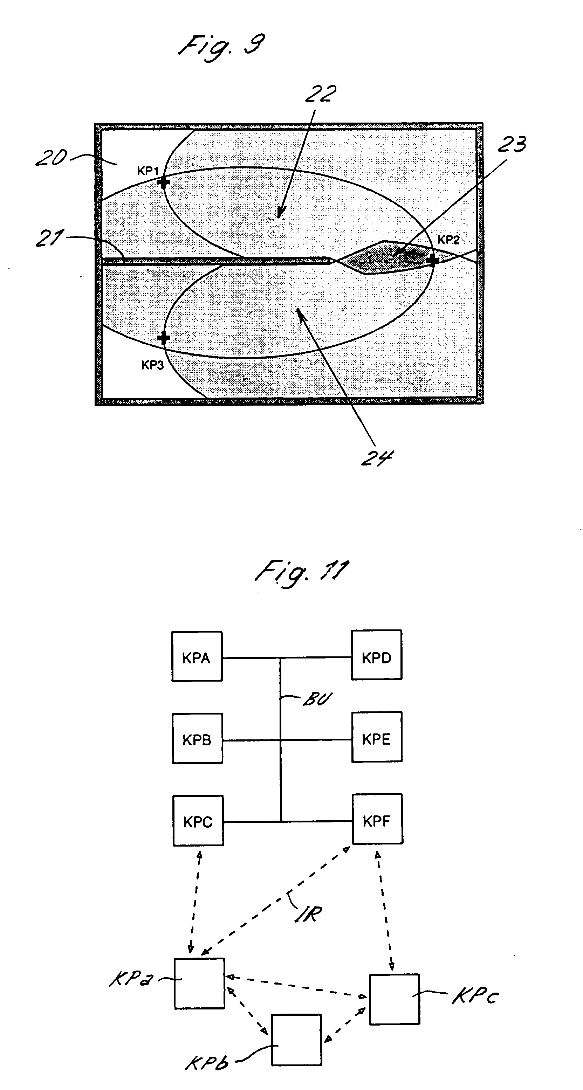

Die Fig. 9 dient zur Erläuterung des "Raum-Problems" im Falle drahtloser Nahverbindung zwischen mehreren Kommunikationspartnern. Gemäss Fig. 9 sei ein Raum 20 mit einer nicht durchgehenden Zwischenwand 21 angenommen, in dem sich mehrere Kommunikationspartner KP1, KP2, KP3 befinden. Ein erster und ein dritter Kommunikationspartner KP1, KP3 sind durch die Zwischenwand 21 getrennt, während ein zweiter Kommunikationspartner KP2 eine Position einnimmt, die etwa auf der Verlängerungsgeraden der Zwischenwand 21 liegen möge. Bei dieser Anordnung ergibt sich für die Sende- und Empfangsverhältnisse ein erster, zweiter und dritter überlappender Bereich 22, 23 bzw. 24, wobei im zweiten Bereich 23 eine Ueberlappung zwischen allen drei Kommunikationspartnern KP1, KP2, KP3 erfolgt, während im ersten und dritten Bereich 22 bzw. 24 eine Ueberlappung zwischen jeweils zwei Kommunikationspartnern KP1, KP2 bzw. KP2, KP3 stattfindet.

Es sei nun angenommen, dass der erste Kommunikationspartner KP1 ein initiierender Kommunikationspartner IKP ist und somit ein Startbit doppelter Länge sendet (D, Fig. 7 und 8). Da im gemeinsamen ersten Bereich 22 liegend, empfängt der zweite Kommunikationspartner KP2 das doppelte Startbit, kennzeichnet sich deshalb als empfangender Kommunikationspartner EKP und sendet unmittelbar danach ein Echo in Form eines Startbits einfacher Länge (B, logisch "1", Fig. 7 und 8) aus (Loop_back mode), wobei das Echo in den unbenutzten Zeiträumen tc (Fig. 6 und 8) übertragen wird. Der dritte Kommunikationspartner KP3 konnte wegen der Zwischenwand 21 das doppelte Startbit vom initiierenden Kommunikationspartner IKP nicht empfangen (hören). Er empfängt jedoch wegen des gemeinsamen dritten Bereiches 24 das einfache Startbit vom zweiten Kommunikationspartner KP2, wird dadurch zu einem empfangenden Kommunikationspartner EKP, sendet aber wegen dem empfangenen einfachen (Echo-) Startbit kein Echo aus. Damit "weiss" also der dritte Kommunikationspartner KP3, dass eine Verbindung besteht (carrier sense) und sendet nicht.

Wird hingegen - bei einem anderen Uebermittlungsvorgang - der zweite Kommunikationspartner KP2 der initiierende (IKP) und sendet ein doppeltes Startbit, so wird dies wegen des gemeinsamen zweiten Bereiches 23 vom ersten und dritten Kommunikationspartner KP1 und KP3 gleichzeitig empfangen (gehört), worauf beide sich als EKP kennzeichnen und ein einfaches Startbit als Echo zurücksenden. Wie weiter unten bei der Funktionsbeschreibung näher erläutert, wird ein initiierender bzw. ein empfangender Kommunikationspartner durch das Setzen von entsprechenden, nicht dargestellten Speichern (z.B. in Form von Flip-Flops) in der Steuereinheit 1 gekennzeichnet.

Dank der unmittelbaren Wiederholung der Information im nächsten halben Signalelement (tc, Fig. 6, 8) und der Voraussetzung, dass jeder Kommunikationspartner mindestens zwei vollständige Signalelement-Dauern mithört, bevor er mit Senden beginnt, kann generell sichergestellt werden, dass immer nur ein Kommunikationspartner sendet.

Beginnen jedoch zwei Kommunikationspartner quasi gleichzeitig mit einem Sendeversuch, so wird durch die unmittelbare Wiederholung der Information als Echo (Loop_back mode) wiederum sichergestellt, dass die gleichzeitig sendenden Kommunikationspartner in der zweiten Signalelementhälfte überprüfen können, ob die ausgesendete Information tatsächlich der empfangenen Information entspricht ("Test"-mode). Ist aber nicht (mindestens) ein dritter Kommunikationspartner vorhanden, hören trotz Kollision die beiden sendenden Kommunikationspartner keinen Fehler auf dem Rückkanal, da nun beide als IKP gekennzeichnet sind und kein Echo zurücksenden können. Ein initiierender Kommunikationspartner kann dann also nicht unterscheiden, ob a) sich kein weiterer Kommunikationspartner im aktuellen Sende/Empfangsbereich befindet oder ob b) aktuell eine Kollision entstand. Es wird deshalb wie folgt verfahren: Empfängt in der Arbitrationsphase ein sendender Kommunikationspartner nicht die gleiche Information, wie er sie ausgesendet hat (also ein anderes oder überhaupt kein Echo), so hat er entsprechend dem CSMA/CA-Protokoll unmittelbar die Sendung einzustellen und erst wieder von neuem zu beginnen, wenn er aufgrund des "carrier sense"-Mechanismus sichergestellt hat, dass kein anderer Kommunikationspartner sendet.

Sind in einen Netzwerk, dessen Konfiguration dynamisch ist (z.B. bei mobilen Teilnehmern), nur zwei Kommunikationspartner im aktuellen Sende/Empfangsbereich, so ergibt sich damit ein Uebergang vom CSMA/CA-Protokoll zu einem CSMA/CD-Protokoll: Beginnen beide Kommunikationspartner gleichzeitig mit der Informationsübermittlung, so werden definitionsgemäss beide Kommunikationspartner zu IKP. Da beide kein Echo hören, müssen beide aufgrund obiger Regel das Senden einstellen. Damit hat sich kein Kommunikationspartner gegenüber dem anderen durchsetzen können, was einem CSMA/CD-Verfahren entspricht. Es wird nun durch unterschiedliche Wartezeiten auf folgende Weise sichergestellt, dass nicht beide Kommunikationspartner von neuem gleichzeitig zu senden beginnen: Hierbei werden für die Bestimmung der Wartezeiten die Adressen der Kommunikationspartner verwendet. Da der Adressraum sehr gross sein kann, so wäre, im Falle von langen Adressen der Kommunikationspartner und einer multiplikativen Verknüpfung der Adresse mit einer Grundwartezeit, mit relativ langen Wartezeiten zu rechnen, bis ein zweiter Zugriffsversuch durchgeführt werden könnte. Aus diesem Grunde wird der Auswahlstrategie der Bisection-Algorithmus zugrunde gelegt:

Beim zweiten Versuch beginnt derjenige Kommunikationspartner, der eine logische "1" im letzten Bit seiner eigenen Adresse hat, eine Zeiteinheit später, während derjenige mit einer logischen "0" im letzten Bit unmittelbar wiederum den Zugriff versucht. Beim nächsten Versuch wird das zweitletzte Bit der Adresse verwendet, und bei weiteren notwendigen Versuchen verschiebt sich so das entscheidende Bit bis zum höchstwertigen Adressbit. Wird auch beim Versuch mit diesem keine Antwort gehört, muss davon ausgegangen werden, dass der Kommunikationspartner keinen korrespondierenden Kommunikationspartner in seinem Sende/Empfangsbereich vorfindet und deshalb gar keine Kommunikation aufbauen kann. Die gewählte Grundeinheit der Wartezeit muss grösser als die Totzeit des Systems sein.

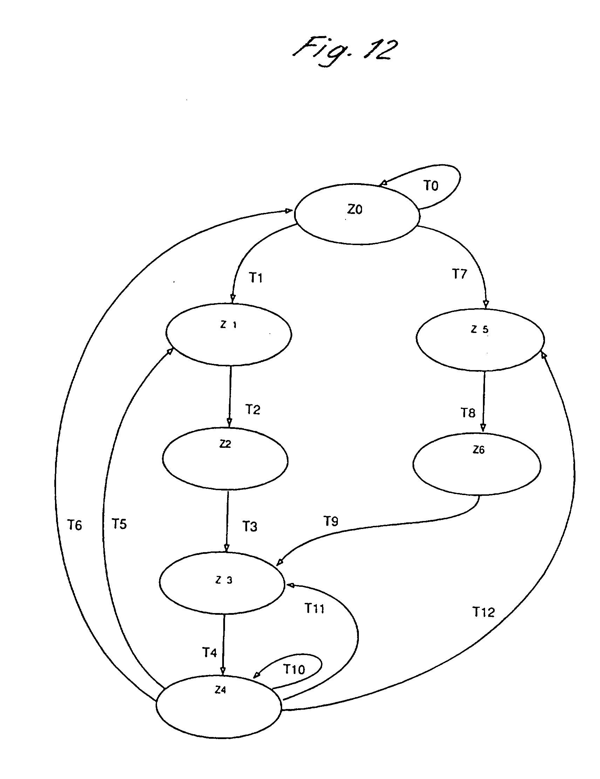

In der Charakter-Definition nach Fig. 10 bedeuten, wie aus dem Stand der Technik bekannt, S1 das Startbit, D0-D7 acht Daten-bits, PB das Paritätsbit und S2 das Stopbit eines Charakters (Zeichens).

Gemäss Fig. 11 sind mit KPA bis KPF sechs Kommunikationspartner bezeichnet, die über einen Bus BU miteinander verbunden sind und ein verdrahtetes Kommunikationsnetzwerk bilden. Mobile Kommunikationspartner KPa, KPb, KPc stehen über Infrarotlicht IR oder Funk miteinander und mit dem verdrahteten Kommunikationsnetzwerk in Verbindung, wobei sie ein nicht drahtgebundenes Netzwerk bilden. Sie können jedoch nicht immer oder auch von anderen Orten aus erreichbar sein. In derartig kombinierten Netzwerken ist daher nicht im voraus bestimmt, mit welchen weiterern Kommunikationspartnern im verdrahteten Netz ein mobiler Kommunikationspartner über den nicht verdrahteten Netzwerkteil zu einem gegebenen Zeitpunkt in Verbindung treten will oder kann. Er kennt insbesondere auch nicht die Adressen möglicher Kommunikationspartner im verdrahteten Netz, mit denen er Kontakt aufnehmen könnte. Er darf aber auch nicht eine Mitteilung an mehrere Kommunikationspartner gleichzeitig senden, da sonst alle diese Kommunikationspartner diese erhaltene Information über das verdrahtete Netz an den Ziel-Kommunikationspartner vermitteln würden, was zu einer unzulässig grossen und unnötigen Busbelastung führen würde.

Aus diesem Grund ist eine Servicefunktion vorgesehen, mit welcher die Adresse eines möglichen Kommunikationspartners erfragt werden kann (General request). Eine solche Servicefunktion muss klar vom Nutzdatenaustausch unterscheidbar sein, und sie hat sich wiederum nur auf die im aktuellen Sende/Empfangsbereich des initiierenden, mobilen Kommunikationspartners befindlichen Kommunikationspartner zu beschränken. Für diese - oder auch andere - Servicefunktionen wird das Signalalphabet-Element A (Fig. 7) im ersten übertragenen Datenbit eines Charakters verwendet, womit der Uebergang in eine Servicefunktion (Servicekanal) markiert wird. Die anschliessend übertragene Information gehört nicht zum eigentlichen, zu übertragenden Nutzinformationsfluss. So können mit den an das Signalelement A anschliessenden, verbleibenden sieben Datenbits D1 - D7 des Charakters (Fig. 10) bis zu 128 verschiedene Servicebefehle übermittelt werden, die nur lokal für den oder die empfangenden Kommunikationspartner Gültigkeit haben und nicht weiter vermittelt werden. Mit einem solchen Befehl kann so auch die gewünschte Adresse der möglichen Kommunikationspartner nach den Regeln des CSMA/CA-Protokolls erfragt werden. Auch können so z.B. logische Adressen für bestimmte Applikationen erfragt werden, so dass von einem mobilen Kommunikationspartner eine Funktion, die an mehreren verschiedenen Orten ortsspezifisch verwirklicht ist, auch ortsspezifisch ausgeführt werden kann, d.h. dass keine wie auch immer geartete Bitkombination des Nutzinformationsflusses ungewollt eine Servicefunktion auslösen kann oder umgekehrt. Dies ist möglich, weil die beiden Modulationsarten zueinander orthogonal gewählt sind.

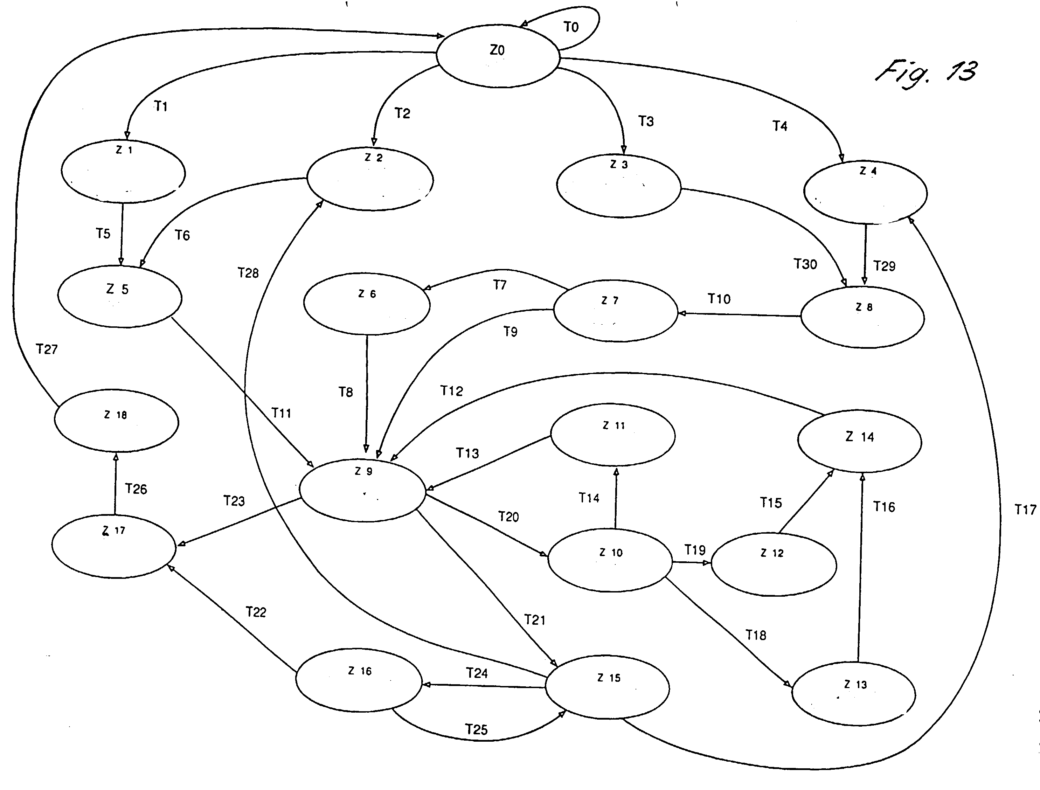

Die Arbeitsweise der vorstehend beschriebenen Einrichtung wird im folgenden näher erläutert, wobei in den Zustandsdiagrammen Fig. 12 (Modulator) und 13 (Empfangsteil) mit Z0, Z1, Z2 .... die jeweiligen Zustände und mit T0, T1, T2 .... die Uebergänge (Transitionen) bezeichnet sind.

Der Sende- und der Empfangsteil 10 bzw. 11 sowie das Schaltwerk 12 arbeiten in einer Handshaking-Betriebsweise zusammen (siehe auch Fig. 4). Der Sendeteil 10 meldet mit einem BS-Signal (bit to send, Anfrage) dem Schaltwerk 12, dass aktuell ein Startbit auf der Leitung Input_TxD zugeführt wurde und nun die Bits des ankommenden Charakters zu übertragen sind. Das Schaltwerk 12 meldet dem Sendeteil 10 mit einem S_Bit-Signal (send bit, Befehl), dass jetzt der Zeitpunkt für das Aussenden des Bits gegeben ist. In gleicher Art meldet der Empfangsteil 11 mit einem BR-Signal (bit received) dem Schaltwerk 12, dass er vom Empfänger 3 über die Leitung In_RxD ein Startbit erhalten hat. Das Schaltwerk 12 steuert nun mit einem R_Bit-Signal (receive a bit) die aktuellen Empfangs zeitpunkte der nächsten zu empfangenden Bits.

Wenn ein Kommunikationspartner Uebermittlungsbedarf hat und noch kein Bit empfangen hat, so wartet er zwei Signalelementdauern, bevor er zu senden beginnt und hört während dieser Zeit, ob das Uebertragungsmedium nicht schon besetzt ist (carrier sense). Dann kennzeichnet er sich durch Setzen eines nicht weiter dargestellten Flip-Flops als initiierender Kommunikationspartner IKP, wobei gleichzeitig die Betriebsart "Test" aktiviert wird. Nun sendet er ein Startbit D doppelter Länge und schaltet am Ende der ersten halben Signalelementdauer tb (Fig. 8) von Senden auf Empfang, wonach er die nächste, zweite halbe Signalelementdauer tc wartet. Während dieser Zeit empfängt er ein Echo in Form eines Startbits B einfacher Länge (Fig. 8). Bei der anschliessenden Sendung der weiteren Bits des betreffenden Charakters werden diese ständig mit dem eintreffenden Echo verglichen, und bei Ungleichheit wird die Sendung abgebrochen. Nach Ende der Informationsübertragung und keinem weiteren Uebermittlungsbedarf wird die Kennzeichnung "IKP" des Kommunikationspartners durch Zurücksetzen des Flip-Flops wieder aufgehoben.

Anhand der Fig. 12 wird der Sendevorgang weiter erläutert. Hierbei befindet sich der Modulator 10.2 in der Ausgangslage, d.h. im Zustand Z0. Sobald nun ein Bit zu senden ist, wird dies dem Modulator 10.2 vom Schaltwerk 12 gemeldet, wobei das System in Abhängigkeit von der Kommunikationspartner-Art (IKP oder EKP) in den Zustand Z5 bzw. Z1 springt und ein einfaches bzw. ein doppeltes Startbit ausgesendet wird. Ueber T2 bzw. T8 erreicht das System die Zustände Z2 bzw. Z6, wo ein nicht dargestellter S_Bit-Zähler dekrementiert und anschliessend gewartet wird. Nach dem Sprung über T3 bzw. T9 wird im Zustand Z3 das aktuelle Bit gesendet, entweder unmittelbar (wenn eine logische "1" dargestellt werden soll) oder nach einer Wartezeit von der halben Dauer des halben Signalelementes (im Falle einer logischen "0"). Der S_Bit-Zähler wird nach dem Sprung über T4 (negative Flanke von S_Bit) im Zustand Z4 dekrementiert und anschliessend wieder gewartet. Nach dieser Wartezeit kann das nächste Bit gesendet werden (T11, Z3). Am Ende eines Charakters werden noch zwei Pseudobits zu Synchronisationszwecken abgewartet, falls die Flow-bridge-Betriebsart in der Steuereinheit 1 aktiviert ist (T10). Während dieser Zeit ist der Ausgang des Modulators 10.2 blockiert. Ist dieser Kommunikationspartner ein IKP und trifft während dieser Zeit das neue Startbit ein, so wird von Z4 über T5 in den Zustand Z1 gewechselt, wo dieses als Startbit mit doppelter Länge gesendet wird. Falls der Kommunikationspartner ein EKP ist, wird über die Transition T12 in den Zustand Z5 gesprungen. Falls dieses Startbit nicht unmittelbar folgt, wird über T6 wiederum in den Zustand Z0 als Ausgangslage gesprungen (Damit ist die Flow-bridge aufgebrochen).

Der Multiplexer 10.3 (Fig. 4) hat die Aufgabe, entsprechend der Systemkonfiguration sicherzustellen, dass die richtige Signalquelle auf den Modulator 10.2 geschaltet wird. Signalquellen in diesem Sinne können sein:
1) Das über die Leitung TxD zugeführte Signal (eigentlicher Informationsfluss),
2) Das unmittelbar über die Uebermittlungsstrecke empfangene Signal (Loop_back mode, wenn der Kommunikationspartner ein EKP ist und ein CSMA/CA-Protokoll angewendet wird), und
3) optional eine Geräteadresse, wenn der Empfänger über einen allgemeinen Aufruf von der Uebermittlungsstrecke her dazu aufgefordert wurde.

Wenn ein Kommunikationspartner, der keinen Uebermittlungsbedarf hat, ein Bit empfängt, kennzeichnet er sich durch Setzen eines nicht dargestellten, weiteren Flip-Flops als empfangender Kommunikationspartner EKP. Ist das Bit ein Startbit D doppelter Länge und ist die Betriebsart "Loop_back" aktiviert, so wird nach Empfang des Startbits D doppelter Länge das Ende der ersten halben Signalelementdauer tb abgewartet und dann von Empfang auf Senden umgeschaltet und ein Echo in Form eines Startbits B einfacher Länge während der zweiten halben Signalelementdauer tc zurückgesendet (Fig. 8). In gleicher Weise werden alle weiteren empfangenen Bits als Echo zurückgesendet, bis die Informationsübertragung abgeschlossen ist, wonach das weitere Flip-Flop zurückgesetzt und damit die Kennzeichnung des Kommunikationspartners wieder aufgehoben wird.

Anhand der Fig. 13 wird die Funktion des Empfangsteiles 11 beim Empfang der Bits näher erläutert. Ausgangslage ist der Zustand Z0. Ein Wechsel des Zustandes wird hier immer ausgelöst durch das Erscheinen der positiven Flanke eines Startbits, das vom Empfänger 3 über die Leitung In_RxD eingeführt wird. Falls die Einrichtung für Flow-bridge-Betrieb konfiguriert ist, wird im nächsten Zustand ein nicht dargestellter Empfangszähler mit dem Wert 13 geladen, sonst mit dem Wert 11. Ebenso wird ein nicht dargestelltes Flip-Flop, das meldet, wenn während dem Empfang eines Charakters ein Schwingungspaket nicht detektiert wurde, zurückgesetzt. Ein BR-Flip-Flop wird gesetzt, welches dem Schaltwerk meldet, dass ein Bit zu empfangen ist. Das Startbit selbst wird in den einen nicht dargestellten Zwischenspeicher geladen. Sobald vom Schaltwerk 12 das R_Bit-Signal (positive Flanke) als Handshake-Signal zum BR-Signal ausgegeben wird, wird entsprechend der aktuellen Kommunikationspartner-Art (IKP oder EKP) in den Zustand Z5 bzw. Z8 gesprungen. Wenn der Kommunikationspartner IKP ist, wartet er im Zustand Z5. Ist er hingegen EKP, wird er jetzt im Zustand Z8 das In_RxD-Signal durch impulsartiges Entladen eines nicht dargestellten Kondensators zurücksetzen und anschliessend warten. Falls nun bis Ende des halben Signalelementes (gemeldet durch die negative Flanke des R_Bit-Signals) der Kondensator durch ein Schwingungspaket wieder aufgeladen werden kann, wird dies durch die positive Flanke des In_RxD-Signals gemeldet. In diesem Falle wurde ein Startbit von doppelter Länge erkannt, was zu einem Wechsel in den Zustand Z7 führt, wo auf das Ende des halben Signalelementes gewartet wird. Der Kommunikationspartner hat in dieser Situation im Loop_back-Betrieb das Signal unmittelbar wieder als Echo zurückzusenden. Dies entspricht einer direkten Verbindung des EKP zum IKP.

Hat er jedoch bis Ende des halben Signalelementes keinen In_RxD-Impuls erhalten, (einfache Länge des Startbits) so hat er das Startbit eines EKP detektiert und darf deshalb kein Signalecho zurücksenden. Der Sender muss blockiert werden. Dies geschieht durch Uebergang in den Zustand Z6. Das Kriterium, um in diesen Zustand zu gelangen (T7), ist das Erscheinen der negativen Flanke des R_Bit-Signals, die das Ende des halben Signalelementes markiert, bevor das In_RxD-Signal erscheint. Wird noch vorher die positive Flanke des In_RxD-Signals erkannt, erfolgt der Uebergang in Z7, wo dann auf das Ende des halben Signalelementes gewartet wird. T8 ist ein unmittelbarer Sprung nach dem Blockieren des Senders im Loop_back mode.

Im Zustand Z9 wird der Empfangszähler dekrementiert, das empfangene Bit ausgegeben und auf das nächste halbe Signalelement für den Empfang gewartet. Dieser Zeitpunkt wird durch das R_Bit-Signal vom Schaltwerk 12 gemeldet, was den Uebergang T20 in den Zustand Z10 veranlasst. In diesem Zustand wird ein nicht dargestellter Diskriminatorzähler initialisiert. Wird nun während der ersten Hälfte des halben Signalelementes die steigende Flanke des In_RxD-Signals detektiert, so wird ein Zwischenspeicher auf logisch "1" gesetzt und anschliessend das Ende des halben Signalelementes abgewartet (Z10, T18, Z13, T16, Z14).

Falls der Diskriminatorzähler über die halbe Dauer des halben Signalelementes hinausgezählt hat und erst dann die positive Flanke des In_RxD-Signals erscheint, wird logisch "0" in den Zwischenspeicher geschrieben. (Z10, T19, Z12, T15, Z14).

Wenn auch in der zweiten Hälfte des Signalelementes kein In_RxD-Signal erschienen ist (Signalelement-Ende erscheint, bevor der Diskriminatorzähler durch das In_RxD-Signal gestoppt wurde), so wird der Zustand Z10 über T14 verlassen, und das erwartete, aber fehlende Schwingungspaket wird im Zustand Z11 durch Setzen eines Flip-Flops markiert. Die steigende Flanke dieses Signals kann nach aussen als "Fehlermeldung" gemeldet werden. Der Vergleich der steigenden Flanke mit dem aktuell zu empfangenden Bit kann aber auch für die Detektion des vierten Signalalphabet-Elementes verwendet werden. Die Zustände Z14 bzw. Z11 werden bei Ende des halben Signalelementes verlassen und es erfolgt der Sprung in den Zustand Z9. Dort wird das sich im Zwischenspeicher befindliche Bit ausgegeben und der Emfpangszähler dekrementiert. In diesen Kreisen (Z9, Z10, Z12 oder Z13 sowie Z14 oder Z11, Z9) werden nun die übrigen Bits in analoger Art empfangen. Falls das letzte Bit empfangen wurde und der Kommunikationspartner im Flow-bridge-Mode konfiguriert ist, wird über T21 in den Zustand Z15 gewechselt, wo der Diskriminator gestoppt wird. Es werden nun noch zwei Pseudobits zur Ueberbrükkung "empfangen", und falls in dieser Zeit ein neues Startbit empfangen wird, wird wieder in den entsprechenden Zustand Z2 bzw. Z4 (T17 bzw. T28) gewechselt. Ist ein Startbit in dieser Zeitdauer nicht angekommen, so wird angenommen, dass nicht nur das Charakterende, sondern das Messageende empfangen wurde und der Kommunikationspartner wieder den Ursprungszustand annehmen kann, wo er die Kommunikationspartner-Art (EKP, IKP) entsprechend der dann vorliegenden aktuellen Situation wieder neu kennzeichnet. Dieser Uebergang erfolgt über T22, Z17, wo das BR-Signal zurückgesetzt wird, T26, Z18 (Stopbit wird ausgegeben), und T27.

Obwohl beim vorstehend beschriebenen Ausführungsbeispiel als Uebertragungsmedium der mobilen Kommunikationspartner Infrarotlicht angenommen wurde, ist es ohne weiteres klar, dass dasselbe Verfahren und die grundsätzlich gleichen Einrichtungen auch bei Funkübertragung (selbstverständlich mit entsprechenden Sendern und Empfängern) anwendbar sind. Das vorgeschlagene Verfahren kann aber auch bei anderen Uebertragungsmedien angewendet werden, die - wie beispielsweise Lichtwellenleiter - nur für Half-Duplex-, nicht aber für Full-Duplex-Betrieb geeignet sind.

## Patentansprüche

1. Verfahren zur bidirektionalen Informationsübertragung, wobei die Uebertragung unter Anwendung eines Protokolls zwischen Kommunikationspartnern (KP1, KP2) durchgeführt wird, die je Sender und Empfänger aufweisen, und wobei die Informationen bitseriell übertragen werden und die Richtung der Informationsflüsse umschaltbar ist,
dadurch **gekennzeichnet**,
- dass ein Kommunikationspartner, der Uebermittlungsbedarf hat und noch kein Bit empfangen hat, sich vor dem Senden als initiierender Kommunikationspartner (IKP) kennzeichnet,
- dass ein Kommunikationspartner, der keinen Uebermittlungsbedarf hat, jedoch ein Bit empfangen hat, sich als empfangender Kommunikationspartner (EKP) kennzeichnet,
- dass der initiierende Kommunikationspartner (IKP) zu Beginn der Informationsübertragung ein seine Kennzeichnung als initierender Kommunikationspartner ausdrückendes Startbit (D) doppelter Länge aussendet und dann eine bestimmte Zeit (tc) wartet,
- dass der empfangende Kommunikationspartner (EKP) nach dem Empfang des Startbits (D) doppelter Länge während der bestimmten Zeit (tc) ein Echo in Form eines Startbits (B) einfacher Länge zurücksendet,
- dass der initiierende Kommunikationspartner (IKP) nach jedem gesendeten Bit eines aus einer Reihe von Bits bestehenden "Charakters ein Echo abwartet,
- dass der initiierende Kommunikationspartner (IKP) jeweils das gesendete Bit mit dem empfangenen Echo vergleicht und bei Ungleichheit seine Sendung abbricht,
- und dass nach Ende der Informationsübertragung und keinem weiteren Uebermittlungsbedarf die Kennzeichnung des initiierenden (IKP) und des empfangenden Kommunikationspartners (EKP) wieder aufgehoben wird.

2. Verfahren nach Anspruch 1, dadurch gekennzeichnet, dass ein nicht im Emfpangsbereich des initiierenden Kommunikationspartners (IKP), jedoch im Empfangsbereich des empfangenden Kommunikationspartners (EKP) liegender Kommunikationspartner das Echo in Form eines Startbits (B) einfacher Länge empfängt und damit selbst zu einem empfangenden Kommunikationspartner (EKP) wird, wobei er das Startbit (B) einfacher Länge als von einem empfangenden Kommunikationspartner (EKP) kommend interpretiert und kein Echo zurücksendet.

3. Verfahren nach Anspruch 1, dadurch gekennzeichnet, dass die Bits in Form von Impulsen übertragen werden, die mittels einer Kombination aus Pulspositions- und Pulsbreitenmodulation moduliert sind.

4. Verfahren nach Anspruch 3, dadurch gekennzeichnet, dass die Impulse aus den Umhüllenden von Schwingungspaketen (Bursts) gebildet sind.

5. Verfahren nach Anspruch 3, dadurch gekennzeichnet,
- dass ein Impuls (B) für die Kennzeichnung von logisch "1" halb so lang wie die Hälfte (tb) des zeitlichen Abstandes (ta) zwischen den zu sendenden Bits ist und am Anfang der ersten Hälfte (tb) beginnt,
- dass ein Impuls (C) für die Kennzeichnung von logisch "0" halb so lang wie die Hälfte (tb) des genannten zeitlichen Abstandes (ta) ist und in der Mitte der ersten Hälfte (tb) beginnt,
- dass ein Impuls (D), der annähernd so lang wie die Hälfte (tb) des genannten zeitlichen Abstandes (ta) ist, als doppelt logisch "1" gewertet wird,
- und dass kein Impuls (A) während der Dauer der Hälfte (tb) des zeitlichen Abstandes (ta) als doppelt logisch "0" gewertet wird.

6. Verfahren nach Anspruch 5, dadurch gekennzeichnet, dass jeder Kommunikationspartner mindestens während der Zeit zweier zeitlicher Abstände (ta) mithört, bevor er zu senden beginnt.

7. Verfahren nach Anspruch 5, dadurch gekennzeichnet, dass bei Sendung keines Impulses (A) als Inhalt des ersten zu übertragenden Datenbits (D0) eines Charakters der Uebergang in eine Servicefunktion markiert wird, wobei mit den nachfolgenden Datenbits (D1-D7) Servicebefehle übermittelt werden.

8. Verfahren nach Anspruch 1, wobei zwei Kommunikationspartner im aktuellen Sende/Empfangsbereich vorhanden und durch Adressen gekennzeichnet sind, dadurch gekennzeichnet, dass bei gleichzeitigem Sendebeginn dieser Kommunikationspartner beide ihre Sendung wieder einstellen und eine bestimmte Zeit warten, und dass für die Bestimmung der Zeitpunkte eines erneuten Sendebeginns die Adressen der Kommunikationspartner verwendet werden.

9. Verfahren nach Anspruch 8, dadurch gekennzeichnet, dass bei einem zweiten Sendeversuch derjenige Kommunikationspartner, der eine logische "0" im letzten Bit seiner Adresse hat, zuerst sendet und derjenige mit einer logischen "1" im letzten Bit seiner Adresse eine Zeiteinheit später sendet, und dass bei weiteren erforderlichen Sendeversuchen jeweils auf das nächste Adress-Bit übergegangen wird, bis das höchstwertige Adress-Bit erreicht ist.

10. Verfahren nach Anspruch 1, dadurch gekennzeichnet, dass der initiierende Kommunikationspartner (IKP) und der empfangende Kommunikationspartner (EKP) sich je durch Setzen eines Speichers kennzeichnen.

11. Einrichtung zur Durchführung des Verfahrens nach Anspruch 1, wobei mindestens zwei Kommunikationspartner (KP1, KP2) vorhanden sind, die je einen Sender (2) und einen Empfänger (3) aufweisen, dadurch **gekennzeichnet**,
- dass eine mit dem Sender (2) und dem Empfänger (3) verbundene Steuereinheit (1) einen Speicher für die Kennzeichnung als initiierender Kommunikationspartner (IKP) und einen weiteren Speicher für die Kennzeichnung als empfangender Kommunikationspartner (EKP) aufweist,
- und dass die Steuereinheit (1) einen ersten Eingang (Test) und einen zweiten Eingang (Loop_back) aufweist, wobei der erste Eingang (Test) mit dem einen Speicher und der zweite Eingang (Loop_back) mit dem weiteren Speicher in Verbindung steht.

12. Einrichtung nach Anspruch 11, dadurch gekennzeichnet,
- dass die Steuereinheit (1) über eine erste Leitung (Out_TxD) mit dem Sender (2) und eine zweite Leitung (In_RxD) mit dem Empfänger (3) verbunden ist,
- dass die Steuereinheit (1) mit einem Oszillator (4) in Verbindung steht,
- und dass ein Spannungspegelwandler (5) vorgesehen ist, der über eine dritte Leitung (Input_TxD) und eine vierte Leitung (Output_RxD) an der Steuereinheit (1) angeschlossen ist, und der über eine fünfte Leitung (TxD) die zu sendenden Informationen erhält und über eine sechste Leitung (RxD) die empfangenen Informationen abgibt.

13. Einrichtung nach Anspruch 12, dadurch gekennzeichnet,
- dass die Steuereinheit (1) einen Sendeteil (10), einen Empfangsteil (11) und ein Schaltwerk (12) aufweist, die miteinander verbunden sind,
- dass der Sendeteil (10) einen Modulator (10.2) und einen Multiplexer (10.3) aufweist,
- wobei das Schaltwerk (12) das Zusammenwirken des Sendeteils (10) und des Empfangsteils (11) beim Senden bzw. Empfangen von Informationen koordiniert.

## Claims

1. A procedure for the bidirectional transmission of information, wherein the transmission is effected with the use of a protocol between communication partners (KP1, KP2), which each have a transmitter and a receiver, and wherein the information is transmitted in serial bits and the direction of the information flows can be reversed.
characterised in that
- one communication partner, which has a communications requirement and has not yet received a bit, identifies itself before the transmission as the initiating communication partner (IKP),
- that one communication partner, which has no communications requirement but has received a bit, identifies itself as the receiving communication partner (EKP),
- that at the start of the transmission of information the initiating communication partner (IKP) transmits a start bit (D) of double length expressing its identification as the initiating communication partner and then waits for a defined time (tc),
- that after receiving the start bit (D) of double length the receiving communication partner (EKP) sends back an echo in the form of a start bit (B) of single length during the defined time (tc),
- that the initiating communication partner (IKP) awaits an echo after each transmitted bit of a "character consisting of a series of bits,
- that the initiating communication partner (IKP) compares each transmitted bit with the echo received and breaks off its transmission in the event of inequality,
- and that after completion of the transmission of information and with no further requirement for communication the identification of the initiating (IKP) and of the receiving communication partner (EKP) is cancelled again.

2. A procedure according to claim 1, characterised in that a communication partner which is not within receiving range of the initiating communication partner (IKP) but which is within receiving range of the receiving communication partner (EKP) receives the echo in the form of a start bit (B) of single length and thus himself becomes a receiving communication partner (EKP), wherein he interprets the start bit (B) of single length as coming from a receiving communication partner (EKP) and sends back no echo.

3. A procedure according to claim 1, characterised in that the bits are transmitted in the form of pulses, which are modulated by means of a combination of pulse position and pulse width modulation.

4. A procedure according to claim 3, characterised in that the pulses are formed from the envelopes of oscillating packets (bursts).

5. A procedure according to claim 3, characterised in that
- a pulse (B) for the identification of logic "1" is half as long as half (tb) of the time interval (ta) between the bits to be transmitted and commences at the start of the first half (tb),
- that a pulse (C) for the identification of logic "0" is half as long as half (tb) of the said time interval (ta) and commences in the middle of the first half (tb),
- that a pulse (D) which is approximately as long as half (tb) of the said time interval (ta) is rated as double logic "1",
- and that no pulse (A) during the period of half (tb) of the time interval (ta) is rated as double logic "0".

6. A procedure according to claim 5, characterised in that each communication partner listens in at least for the period of two time intervals (ta) before it begins to transmit.

7. A procedure according to claim 5, characterised in that when no pulse (A) is transmitted as a content of the first data bit (DO) of a character to be transmitted the transition into a service function is marked, wherein service commands are communicated with the subsequent data bits (D1-D7).

8. A procedure according to claim 1, wherein two communication partners are present within the current transmission/reception range and are identified by addresses, characterised in that when both these communication partners commence their transmissions simultaneously both re-set their transmission and wait for a defined time, and that the addresses of the communication partners are used to determine the times of a new commencement of transmission.

9. A procedure according to claim 8, characterised in that on a second transmission attempt that communication partner which has a logic "0" in the final bit of its address transmits first and the one with a logic "1" in the final bit of his address transmits one unit of time later, and that if further transmission attempts are necessary a transition is made to the next address bit in each case until the highest value address bit is reached.

10. A procedure according to claim 1, characterised in that the initiating communication partner (IKP) and the receiving communication partner (EKP) each identify themselves by setting a memory.

11. A device for carrying out the procedure according to claim 1, wherein at least two communication partners (KP1, KP2) are present, which each have a transmitter (2) and a receiver (3), characterised in that
- a control unit (1) connected to the transmitter (2) and the receiver (3) comprises a memory for the identification as the initiating communication partner (IKP) and a further memory for the identification as the receiving communication partner (EKP),
- and that the control unit (1) has a first input (test) and a second input (loop_back), wherein the first input (test) is connected to one memory and the second input (loop_back) is connected to the further memory.

12. A device according to claim 11, characterised in that
- the control unit (1) is connected via a first line (Out_TxD) to the transmit (2) and via a second line (In_RxD) to the receiver (3),
- that the control unit (1) is connected to an oscillator (4),
- and that a voltage level converter (5) is provided, which is connected to the control unit (1) via a third line (Input_TxD) and a fourth line (Output_RxD), and which receives the information to be transmitted via a fifth line (TxD) and emits the received information via a sixth line (RxD).

13. A device according to claim 12, characterised in that
- the control unit (1) comprises a transmitter part (10), a receiver part (11) and a switching device (12) which are connected to each other,
- that the transmitter part (10) comprises a modulator (10.2) and a multiplexer (10.3),
- wherein the switching device (12) coordinates the cooperation of the transmitter part (10) and the receiver part (11) when transmitting or receiving information.

## Revendications

1. Procédé de transmission bidirectionnelle d'informations, selon lequel la transmission est exécutée au moyen de l'utilisation d'un protocole entre des partenaires de communication (KP1,KP2), qui possèdent chacun un émetteur et un récepteur, et selon lequel les informations sont transmises en série au niveau des bits et la direction des flux d'informations est commutable,
caractérisé en ce
- qu'un partenaire de communication, qui exprime un besoin de retransmission et n'a encore reçu aucun bit, se caractérise, avant l'émission, en tant que partenaire de communication initiateur (IKP),
- qu'un partenaire de communication, qui n'exprime aucun besoin de retransmission, mais a reçu un bit, se caractérise comme un partenaire de communication récepteur (EKP),
- que le partenaire de communication initiateur (IKP) émet, au début de la transmission d'informations, un bit de départ (D) qui exprime sa caractérisation en tant que partenaire de communication initiateur et possède une longueur double et attend ensuite pendant un intervalle de temps déterminée (tc),
- qu'après la réception du bit de départ (D) possédant une longueur double, le partenaire de communication récepteur (EKP) renvoie, pendant l'intervalle de temps déterminé (tc), un écho sous la forme d'un bit de départ (D) de simple longueur,
- qu'après chaque bit émis d'un caractère constitué par une série de bits, le partenaire de communication initiateur (IKP) attend un écho,
- que le partenaire de communication initiateur (IKP) compare respectivement le bit émis à l'écho reçu et, en cas d'inégalité, interrompt son émission, et
- qu'à la fin de la transmission d'informations et en l'absence d'un besoin supplémentaire de retransmission, la caractérisation du partenaire de communication initiateur (IKP) et du partenaire de communication récepteur (EKP) est à nouveau supprimée.

2. Procédé selon la revendication 1, caractérisé en ce qu'un partenaire de communication, qui n'est pas situé dans la zone de réception du partenaire de communication initiateur (IKP), mais est situé dans la zone de réception du partenaire de communication récepteur (EKP), reçoit l'écho sous la forme d'un bit de départ (B) de simple longueur et par conséquent devient lui-même partenaire de communication récepteur (EKP), ce dernier interprétant le bit de départ (B) de simple longueur comme arrivant d'un partenaire de communication récepteur (EKP), et ne renvoyant aucun écho.

3. Procédé selon la revendication 1, caractérisé en ce que les bits sont transmis sous la forme d'impulsions, qui sont modulées au moyen d'une combinaison d'une modulation de position d'impulsions et d'une modulation d'impulsions en durée.

4. Procédé selon la revendication 3, caractérisé en ce que les impulsions sont formées à partir des enveloppes de paquets d'oscillations (salves).

5. Procédé selon la revendication 3, caractérisé en ce
- qu'une impulsion (B) pour la caractérisation d'un "1" logique possède une durée égale à la moitié (tb) de l'intervalle de temps (te) entre les bits devant être émis et commence au début de la première moitié (tb),
- qu'une impulsion (C) pour la caractérisation du "0" logique possède une longueur égale à la moitié de la durée de la moitié (tb) dudit intervalle de temps (ta) et commence au centre de la première moitié (tb),
- qu'une impulsion (D), qui possède une longueur approximativement égale à la moitié (tb) dudit intervalle de temps (ta), est évaluée deux fois en tant que "1" logique, et
- qu'aucune impulsion (A) est évaluée pendant la durée de la moitié (tb) de l'intervalle de temps (ta), comme étant un "0" logique double.

6. Procédé selon la revendication 5, caractérisé en ce que chaque partenaire de communication écoute pendant au moins la durée de deux intervalles de temps (ta) avant de commencer à émettre.

7. Procédé selon la revendication 5, caractérisé en ce que lors de l'émission d'aucune impulsion (A), en tant que contenu du premier bit de données à transmettre (D0) d'un caractère le passage à une fonction de service est marqué , des instructions de service étant retransmises avec les bits de données suivants (D1-D7).

8. Procédé selon la revendication 1, selon lequel deux partenaires de communication sont présents dans la zone actuelle d'émission/de réception et sont identifiés par des adresses, caractérisé en ce que lors du début simultané d'émission de ces partenaires de communication, ces deux partenaires règlent à nouveau leur émission et attendent pendant un intervalle de temps déterminé, et que les adresses des partenaires de communication sont utilisées pour la détermination des instants d'un nouveau début d'émission.

9. Procédé selon la revendication 8, caractérisé en ce que dans le cas d'un second essai d'émission, le partenaire de communication, qui possède un "0" logique dans le dernier bit de son adresse, émet en premier et celui, qui possède un "1" logique dans le dernier bit de son adresse, émet une unité de temps plus tard, et que dans le cas d'autres tentatives nécessaires d'émission, on passe respectivement aux bits d'adresse immédiatement suivants, jusqu'à ce que le bit d'adresse de poids maximum soit atteint.

10. Procédé selon la revendication 1, caractérisé en ce que le partenaire de communication initiateur (IKP) et le partenaire de communication récepteur (EKP) se caractérisent respectivement par le positionnement d'une mémoire.

11. Dispositif pour la mise en oeuvre du procédé selon la revendication 1, selon lequel il est prévu au moins deux partenaires de communication (KP1, KP2), qui comportent chacun un émetteur (2) et un récepteur (3),
caractérisé en ce
- qu'une unité de commande (1) reliée à l'émetteur (2) et au récepteur (3) comporte une mémoire pour la caractérisation en tant que partenaire de communication initiateur (IKP) et une autre mémoire pour la caractérisation en tant que partenaire de communication récepteur (EKP), et
- que l'unité de commande (1) possède une première entrée (Test) et une seconde entrée (Loop_back), la première entrée (Test) étant reliée à une mémoire et la seconde entrée (Loop_back) étant reliée à l'autre mémoire.

12. Dispositif selon la revendication 11,
caractérisé en ce
- que l'unité de commande (1) est reliée à l'émetteur (2) par l'intermédiaire d'une première ligne (Out_TxD) et au récepteur (3) par l'intermédiaire d'une seconde ligne (In_Rdx),
- que l'unité de commande (1) est reliée à un oscillateur (4), et
- qu'il est prévu un convertisseur de niveau de tension (5), qui est raccordé par l'intermédiaire d'une troisième ligne (Input_RxD) et une quatrième ligne (Output_RxD) à l'unité de commande (1) et qui reçoit, par l'intermédiaire d'une cinquième ligne (TxD), les informations à émettre et délivre, par l'intermédiaire d'une sixième ligne (RxD) les informations reçues.

13. Dispositif selon la revendication 12,
caractérisé en ce
- que l'unité de commande (1) possède une partie d'émission (10), une partie de réception (11) et une unité de commutation (12), qui sont reliées entre elles,
- que la partie d'émission (10) possède un modulateur (10.2) et un multiplexeur (10.3),
- l' unité de commutation (12) coordonnant la coopération de la partie d'émission (10) et de la partie de réception (11) lors de l'émission ou de la réception d'informations.
